(19) **Europäisches Patentamt European Patent Office Office européen des brevets**

(11) **EP 1 976 712 B1**

(12) **FASCICULE DE BREVET EUROPEEN**

(45) Date de publication et mention
de la délivrance du brevet:
**28.10.2009 Bulletin 2009/44**

(21) Numéro de dépôt: **07703805.7**

(22) Date de dépôt: **11.01.2007**

(51) Int Cl.:
***B60C 17/06*** *(2006.01)*

(86) Numéro de dépôt international:
**PCT/EP2007/050262**

(87) Numéro de publication internationale:
**WO 2007/080180 (19.07.2007 Gazette 2007/29)**

(54) **STRUCTURE PORTEUSE POUR APPUI DE SOUTIEN ET APPUI DE SOUTIEN OPTIMISES**

OPTIMIERTE TRAGESTRUKTUR FÜR EIN STÜTZELEMENT UND OPTIMIERTES STÜTZELEMENT

OPTIMIZED BEARING STRUCTURE FOR A SUPPORTING ELEMENT, AND OPTIMIZED SUPPORTING ELEMENT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **12.01.2006 FR 0600279**

(43) Date de publication de la demande:
**08.10.2008 Bulletin 2008/41**

(73) Titulaires:
• **Société de Technologie Michelin**
**63000 Clermont-Ferrand (FR)**
• **Michelin Recherche et Technique S.A.**
**1763 Granges-Paccot (CH)**
• **E.I. DU PONT DE NEMOURS AND COMPANY**
**Wilmington, DE 19898 (US)**

(72) Inventeurs:
• **ALBERT, Loïc**
**F-63100 Clermont-Ferrand (FR)**
• **BROUWERS, Xavier**
**F-74330 Poisy (FR)**
• **CAGNEAUX, Guy**
**F-63830 Nohanent (FR)**
• **MONDINI, Fabien**
**F-75012 Paris (FR)**
• **RIGO, Sébastien**
**F-63000 Clermont-Ferrand (FR)**
• **SZEKELY, Peter**
**74370 Pringy (FR)**
• **VAN DER LELIJ, Adam, J.**
**CH-1222 Vesenaz (CH)**
• **VAN DER ZYPPE, Damien**
**F-94500 Champigny-sur-Marne (FR)**

(74) Mandataire: **Dequire, Philippe Jean-Marie Denis M.F.P. Michelin,
SGD/LG/PI-F35-Ladoux
63040 Clermont-Ferrand Cedex 09 (FR)**

(56) Documents cités:
**EP-A- 1 356 958      EP-A- 1 466 760
US-A- 4 921 029**

• **PATENT ABSTRACTS OF JAPAN vol. 1995, no. 05, 30 juin 1995 (1995-06-30) & JP 07 032827 A (YOKOHAMA RUBBER CO LTD:THE), 3 février 1995 (1995-02-03)**

## Description

La présente invention concerne les appuis de soutien pour pneumatiques de véhicule destinés à être montés sur leurs jantes, à l'intérieur des pneumatiques, pour supporter la charge en cas de défaillance du pneumatique ou de pression de gonflage anormalement basse.

De nombreuses publications décrivent de tels appuis de soutien. A titre d'exemple, la publication WO 00/76791 présente un appui de soutien comportant une base sensiblement cylindrique destinée à s'adapter autour de la jante, un sommet sensiblement cylindrique destiné à entrer en contact avec la partie intérieure du pneumatique située sous la bande de roulement en cas de perte de pression et laissant une garde par rapport à celle-ci à la pression nominale de fonctionnement du pneumatique, et un corps annulaire reliant la base et le sommet, dans lequel le corps annulaire est constitué par une pluralité de cloisons radiales, s'étendant axialement de part et d'autre d'un plan médian circonférentiel, réparties sur la circonférence de l'appui et reliées deux à deux par des éléments de jonction s'étendant sensiblement circonférentiellement. Dans ce document, la géométrie des cloisons est adaptée dans leur partie centrale pour résister à un flambement sous un chargement radial du corps annulaire. Ces profils de corps annulaires permettent d'obtenir une très forte rigidité structurelle de l'appui et ainsi d'obtenir des appuis très légers pour une capacité de soutien donnée en roulage à plat. Il est à noter que la diminution du poids des ensembles roulants non suspendus constitue un élément majeur de la performance des véhicules et qu'à ce titre, l'allègement de l'appui représente un enjeu de premier ordre.

Toutefois, si les appuis de soutien sont conçus pour satisfaire les conditions de soutien lors de roulages à plat, ils doivent aussi perturber le moins possible le fonctionnement du pneumatique en condition d'usage normal sous pression nominale de gonflage. C'est en particulier le cas lorsque le véhicule affronte accidentellement un obstacle localisé, tel un nid de poule ou un trottoir, à une vitesse excessive. Lorsqu'un tel événement accidentel se produit, l'obstacle agit comme un coin et vient comprimer localement le pneumatique, lequel va se déformer. L'obstacle comprime ensuite l'appui de soutien.

Le document WO 2005/044598 divulgue un appui de soutien similaire à celui du document WO 00/76791 dans lequel les jonctions circonférentielles sont interrompues par des saignées axiales de très faible largeur. La présence de ces saignées axiales permet de diminuer lors d'un choc accidentel le seuil de flambement des cloisons sans perturber notablement le comportement lors d'un roulage à plat.

Le document JP 07032827 présente un appui de soutien correspondant au préambule de la revendication 1 dans lequel chaque cloison présente avec une cloison adjacente circonférentiellement une zone commune disposée sensiblement à mi-hauteur radiale du corps annulaire de l'appui.

L'invention a pour objet un appui de soutien qui permet d'améliorer sensiblement le compromis entre les performances en conditions de roulage à plat et lors d'un choc accidentel.

L'invention a pour objet une structure porteuse pour appui de soutien destiné à être monté sur une jante à l'intérieur d'un pneumatique équipant un véhicule. Cette structure porteuse comprend une base sensiblement cylindrique, un sommet sensiblement cylindrique et un corps annulaire reliant la base et le sommet. Cette structure porteuse est **caractérisée en ce que** le corps comporte une pluralité de cloisons régulièrement réparties circonférentiellement, s'étendant axialement substantiellement d'un côté à l'autre du corps et radialement de la base au sommet avec une orientation moyenne relativement à la direction radiale comprise entre 10 et 50 degrés, en ce que deux cloisons adjacentes circonférentiellement présentent une orientation inversée relativement à la direction radiale et en ce que deux cloisons adjacentes circonférentiellement définissent avec la base et/ou le sommet des cavités en forme de triangle et/ou de trapèze.

La géométrie des corps annulaires selon l'invention permet de concevoir des structures porteuses pour appuis et des appuis avec une forte rigidité structurelle initiale, comparable à celle des appuis précédents, ce qui leur procure un bon comportement en roulage à plat ainsi qu'un flambement facilité sous une sollicitation localisée dans l'aire de contact, par exemple lors d'un choc. Ce flambement facilité améliore sensiblement le comportement lors d'un choc accidentel en rapprochant ce comportement de celui d'un pneumatique seul sans appui de soutien. Lorsque l'angle des cloisons relativement à la direction radiale devient inférieur à 10 degrés, leur comportement devient très similaire à celui de cloisons radiales et le comportement lors d'un choc accidentel se dégrade. En revanche, lorsque l'angle des cloisons devient supérieur à 50 degrés, on constate que la géométrie de l'appui de soutien devient trop souple et c'est le comportement en roulage à plat qui se dégrade.

De préférence, le rapport entre l'épaisseur des cloisons dans leur partie centrale et la hauteur radiale du corps annulaire est supérieur à 10 %. En conséquence le flambement des cloisons n'intervient que largement au-delà de la charge nominale de fonctionnement lors d'un roulage à plat.

Les structures porteuses selon l'invention sont telles que la base comprend des matériaux dont le module en extension est supérieur au module en extension des matériaux constituants du sommet. Les bases comprennent usuellement des matériaux haut module, tels des câbles en acier ou aramide pour garantir un bon comportement lors d'une centrifugation à haute vitesse. En revanche, les sommets des structures porteuses ne comportent aucun matériau de module supérieur au module du matériau constituant essentiel de la structure porteuse.

Les cloisons adjacentes peuvent présenter, relativement à la direction radiale, des inclinaisons moyennes d'angles alpha et bêta différents. Ce mode de réalisation permet de tenir compte de l'existence d'efforts tangentiels lors du passage dans l'aire de contact.

De préférence, les cloisons comportant deux parois extérieures et une courbe médiane disposée intérieurement dont chaque point est à égale distance des deux parois extérieures, la courbe médiane est, au moins pour la partie centrale des cloisons, contenue dans un même plan médian, appelé « plan médian » de la cloison.

Les cloisons ont ainsi de préférence une forme linéaire. Cette géométrie renforce la rigidité structurelle initiale des cloisons en les faisant travailler sous chargement radial en compression et non en flexion et favorise aussi une augmentation de la diminution de raideur structurelle lors d'un choc localisé après le flambement des cloisons sollicitées.

De préférence, les parois extérieures des cloisons sont aussi planes, au moins dans leur partie centrale.

Selon un mode de réalisation préférentiel, lorsque deux cloisons adjacentes présentent une intersection entre leurs plans médians disposée radialement entre la base et le sommet, lesdites deux cloisons se prolongent radialement jusqu'à la base ou le sommet selon le cas par une partie commune et l'ensemble présente dans tout plan circonférentiel une forme générale de Y.

Cela permet d'adapter aisément la géométrie des cloisons en fonction des géométries et charges nécessaires pour supporter la charge de différents types de pneumatiques.

Il est à noter que la valeur de l'orientation moyenne des cloisons, alpha, bêta, est déterminée en prenant en compte l'angle entre la direction radiale et les intersections entre la courbe médiane des cloisons et d'une part la base et d'autre part le sommet.

Avantageusement, en considérant trois cloisons adjacentes circonférentiellement, les deux premières étant en forme de V, telles que les deux extrémités du V sont au niveau du sommet, $L$ étant la distance circonférentielle séparant les deux points d'intersection des plans médians des deux premières cloisons et du sommet, et $l$ étant la distance circonférentielle séparant les points d'intersection avec le sommet des plans médians des seconde et troisième cloisons, on a :

$$0 \leq \frac{l}{L} \leq 1$$

En conséquence, au niveau de la liaison entre le corps et le sommet, l'écart entre les extrémités de deux cloisons adjacentes peut varier entre 0 et L.

De préférence, on a :

$$0,80 \leq \frac{l}{L} \leq 1$$

Cela permet d'obtenir sensiblement le même comportement mécanique de la structure porteuse de l'appui et de l'appui quel que soit son azimut en minimisant les écarts de contrainte au sein des cloisons ainsi que les écarts de raideur circonférentielle lors d'un écrasement sur sol plan.

Selon un autre mode de réalisation préférentiel, le corps comprend en plus des cloisons de liaison régulièrement réparties entre deux cloisons adjacentes et orientées circonférentiellement. Ces cloisons de liaison ont aussi de préférence une orientation radiale. Elles peuvent aussi avoir une orientation axiale.

Ces cloisons de liaison renforcent la rigidité structurelle de la structure porteuse de l'appui à faible charge ainsi que la résistance à une rotation relative du sommet relativement à la base, ce qui augmente la durée de vie de la structure porteuse et de l'appui de soutien en roulage à plat.

Les cloisons de liaison peuvent constituer un voile continu circonférentiellement.

Les cloisons de liaison peuvent aussi ne relier qu'une fraction donnée des cloisons et préférentiellement la moitié desdites cloisons.

De façon avantageuse, le rapport d'épaisseur entre les cloisons de liaison e et les cloisons $E$ est tel que :

$$0,1 \prec \frac{e}{E} \prec 0,5$$

Le respect de la valeur maximale de ce rapport assure que les cloisons n'ont qu'un rôle secondaire dans le port de la charge, ce qui permet aux cloisons de pleinement jouer leur rôle lors d'un flambement localisé. La limite minimale est liée à des questions de possibilité et facilité de moulage.

Les cloisons de liaison peuvent aussi comporter des trous. Ces trous permettent d'alléger le poids de la structure porteuse de l'appui et de l'appui sans affecter le rôle mécanique des cloisons de liaison.

Selon un mode de réalisation avantageux, les cloisons de liaison présentent une orientation de quelques degrés relativement à la direction circonférentielle et préférentiellement inférieur à 10 degrés. Cette orientation circonférentielle renforce la résistance de la structure porteuse de l'appui contre une rotation d'ensemble du sommet relativement à la base.

Selon un autre mode de réalisation avantageux, les cloisons présentent une inclinaison axiale de quelques degrés. Cela permet d'augmenter sensiblement leur rigidité structurelle.

De préférence, l'inclinaison axiale des cloisons est inférieure à 10 degrés.

Selon une autre caractéristique préférentielle des structures porteuses pour appui selon l'invention, les cloisons définissent avec la base et le sommet des cavités dans les parois sont substantiellement planes et reliées par des surfaces de rayon de courbure supérieur à un mm. Cela permet d'obtenir une bonne résistance à la fatigue en roulage à plat.

Selon un autre mode de réalisation préférentiel, chacune des cloisons est constituée de deux cloisons parallèles reliées à chaque extrémité par une cloison d'orientation radiale.

Ce mode de réalisation a l'avantage de s'adapter à des structures porteuses pour appuis de distance plus importante entre la base et le sommet sans nécessiter d'augmenter sensiblement l'épaisseur des cloisons, ce qui pourrait poser des problèmes de réalisation pratique, notamment lorsque les structures porteuses et/ou les appuis sont réalisés par injection dans un moule.

Le matériau constitutif principal des structures porteuses selon l'invention peut être un mélange caoutchouteux de module d'élasticité compris entre 10 et 40 MPa ; il peut aussi être un élastomère de polyuréthanne de module d'élasticité compris entre 30 et 400 MPa. Selon une variante préférentielle, il peut aussi être un élastomère thermoplastique de module d'élasticité compris entre 50 et 800 MPa et de préférence entre 50 et 500 MPa. Le module de traction est un module mesuré à 23°C selon la norme ISO527/2.

Avantageusement, le matériau principal est un polymère sélectionné parmi les suivants : copolyéther-esters élastomériques, copolyester-esters élastomériques, copolyéther block amides, polyéther polyuréthanes thermoplastiques, polyester polyuréthanes thermoplastiques, polyamide 6 (polymère de caprolactame) de préférence avec modifiant choc ou plastifiant, polyamide 11 (polymère d'acide amino-undecanoic) de préférence avec modifiant choc ou plastifiant, polyamide 12 (polymère de laurolactam), de préférence avec modifiant choc ou plastifiant, copolymères de polyamide 6/polyamide 12, de préférence avec modifiant choc ou plastifiant, polyamide 66, de préférence avec modifiant choc ou plastifiant, polybutylene terephthalate (PBT), de préférence avec modifiant choc ou plastifiant, élastomères thermoplastiques d'oléfines, élastomères thermoplastiques styréniques, caoutchoucs thermoplastiques vulcanisés (TPV), et mélanges de ces polymères.

Les polyamides sont avantageusement sélectionnés parmi les suivants : polyamide 6 (polymère de caprolactame) de préférence avec modifiant choc ou plastifiant, polyamide 11 (polymère d'acide aminoundecanoic) de préférence avec modifiant choc ou plastifiant, polyamide 12 (polymère de laurolactam) de préférence avec modifiant choc ou plastifiant, polyamide 66 de préférence avec modifiant choc ou plastifiant, polyamide 10 de préférence avec modifiant choc ou plastifiant, polyamide 1010 de préférence avec modifiant choc ou plastifiant, copolymères de polyamide 6/polyamide 12 de préférence avec modifiant choc ou plastifiant, copolymères de polyamide 6/polyamide 10 de préférence avec modifiant choc ou plastifiant, copolymères de polyamide 6/polyamide 12 de préférence avec modifiant choc ou plastifiant.

De préférence, le matériau principal est un polymère sélectionné parmi les suivants : copolyéther-esters élastomériques, copolyester-esters élastomériques, copolyéther block amides, polyéther polyuréthanes thermoplastiques, polyester polyuréthanes thermoplastiques et mélanges de ces polymères.

Tous ces polymères peuvent contenir avantageusement des additifs et des produits renforçants, tels que les fibres ou particules (y compris les nanoparticules) de verre, pierre, céramique, silice, minérales, entre autres.

L'invention a aussi pour objet un appui de soutien comportant une structure porteuse selon l'invention et tel que la base de la structure porteuse constitue, au moins en partie, la base de l'appui destinée à s'adapter autour d'une jante et le sommet de la structure porteuse constitue, au moins en partie, le sommet de l'appui destiné à entrer en contact avec la partie intérieure d'un pneumatique située sous la bande de roulement en cas de perte de pression de gonflage et laissant une garde par rapport à celle-ci à la pression nominale de fonctionnement du pneumatique.

Selon un mode de réalisation, l'appui de soutien selon l'invention comporte plusieurs structures porteuses selon l'invention adjacentes axialement.

Un tel appui peut comprendre deux structures porteuses selon l'invention.

Préférentiellement, les deux structures porteuses ayant des cloisons disposées circonférentiellement avec un pas *p*, les deux structures porteuses sont décalées circonférentiellement dé *p/2*.

Un tel appui comprenant deux structures porteuses de géométries décalées circonférentiellement de p/2 a une réponse mécanique plus constante en fonction de l'azimut.

On peut aussi disposer les cloisons de telle sorte que, la première structure porteuse ayant des cloisons orientées relativement à la direction axiale avec des angles différents alpha et bêta, la seconde structure porteuse a des cloisons orientées relativement à la direction radiale avec des angles bêta et alpha.

Cet appui peut ainsi s'adapter aux deux sens de roulage possibles.

L'invention a aussi pour objet un appui de soutien de bande de roulement comportant deux structures porteuses selon l'invention adjacentes radialement.

Un tel appui est de préférence tel que :

- la base de la structure porteuse disposée radialement intérieurement constitue, au moins en partie, la base dudit appui ;
- le sommet de la structure porteuse disposée radialement extérieurement constitue, au moins en partie, le sommet dudit appui ;

- le sommet de la structure porteuse disposée radialement intérieurement est confondu avec la base de la structure porteuse disposée radialement extérieurement ; et

- les cloisons de support des deux structures porteuses disposées radialement en regard sont reliées à la structure commune base/sommet aux mêmes azimuts et s'écartent de ladite structure commune base/sommet avec des orientations inversées relativement à la direction radiale.

L'invention a aussi pour objet un appui de soutien de bande de roulement comportant une structure porteuse selon l'invention et comportant en outre des éléments de blocage prolongeant axialement d'un côté de l'appui cette structure porteuse.

De préférence, ces éléments de blocage prolongent axialement les cloisons de support de la structure porteuse ainsi que la base de la structure porteuse au droit des cloisons de support.

Les éléments de blocage peuvent aussi comporter des moyens de fixation amovible d'un module de roue. Un tel module de roue est usuellement utilisé pour, notamment, la surveillance de la pression de gonflage du pneumatique.

D'autres caractéristiques et avantages de l'invention ressortent de la description faite ci-après en référence aux dessins annexés qui montrent, à titre d'exemples non limitatifs, des formes de réalisation de l'objet de l'invention :

- la figure 1 est une vue en perspective schématique simplifiée d'une structure porteuse pour appui de soutien selon l'invention ;
- la figure 2 représente une vue en coupe circonférentielle partielle de la structure porteuse de la figure 1 ;
- la figure 3 présente une vue en coupe circonférentielle partielle d'un mode de réalisation d'une structure porteuse avec des angles d'inclinaison des cloisons différents (α, β) ;
- la figure 4 représente une vue similaire à la figure 2 d'un second mode de réalisation ;
- la figure 5 représente une vue similaire à la figure 2 d'un troisième mode de réalisation ;
- la figure 6 représente une vue similaire à la figure 2 d'un quatrième mode de réalisation ;
- la figure 7 présente un cinquième mode de réalisation ;
- la figure 8 présente un sixième mode de réalisation ;
- la figure 9 présente en coupe EE tel qu'indiqué à la figure 5 un septième mode de réalisation ;
- la figure 10 présente en coupe EE tel qu'indiqué à la figure 5 un huitième mode de réalisation ;
- la figure 11 présente en perspective avec éclaté partiel un neuvième mode de réalisation ;
- la figure 12 est une vue de côté de l'appui de la figure 11 ;
- la figure 13 présente en coupe circonférentielle radiale un dixième mode de réalisation ;
- la figure 14 présente un exemple alternatif d'appui de hauteur importante ;
- la figure 15 présente des courbes d'écrasement de la structure porteuse de la figure 1 sur sol plan et sur coin ;
- la figure 16 présente un appui comportant des éléments de blocage du bourrelet d'un pneumatique ;
- la figure 17 présente un agrandissement de la figure 16 ;
- la figure 18 présente un appui avec des moyens de fixation d'un module de roue ;
- la figure 19 illustre un module fixé par les éléments de blocage de l'appui ;
- la figure 20 présente en vue de dessus l'ensemble des canaux d'injection d'un appui selon l'invention ;
- la figure 21 est une vue en coupe ZZ tel qu'indiqué à la figure précédente ; et
- la figure 22 présente en coupe axiale un appui selon la figure 16 monté sur une jante de roue adaptée.

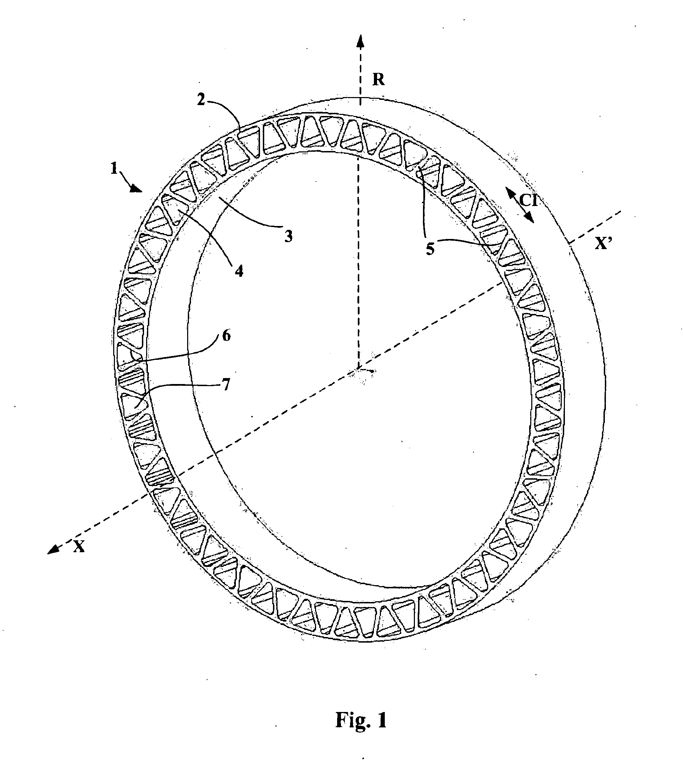

Dans ce qui suit, on désignera par les mêmes références les éléments identiques des appuis et structures porteuses représentés aux figures 1 à 22.

La structure porteuse 1 telle que représentée sur la vue schématique de la figure 1 comprend une base 3 sensiblement cylindrique, un sommet 2 et un corps 4 reliant la base au sommet. Cette structure porteuse 1 constitue usuellement tout ou partie d'un appui de soutien de la bande de roulement d'un pneumatique. La base 3 est destinée à s'adapter autour d'une jante (non représentée) et le sommet est destiné à entrer en contact avec la partie intérieure du pneumatique située sous la bande de roulement en cas de perte de pression. La base 3 comporte usuellement des renforts circonférentiels de haut module non représentés pour s'opposer aux efforts de centrifugation à haute vitesse de roulage.

La direction axiale XX' est une direction sensiblement parallèle aux génératrices des cylindres formés par la base ou le sommet. La direction radiale R est une direction perpendiculaire à la direction axiale, et la direction circonférentielle CI est perpendiculaire aux deux directions précédentes et tangente aux cylindres formés par la base ou le sommet.

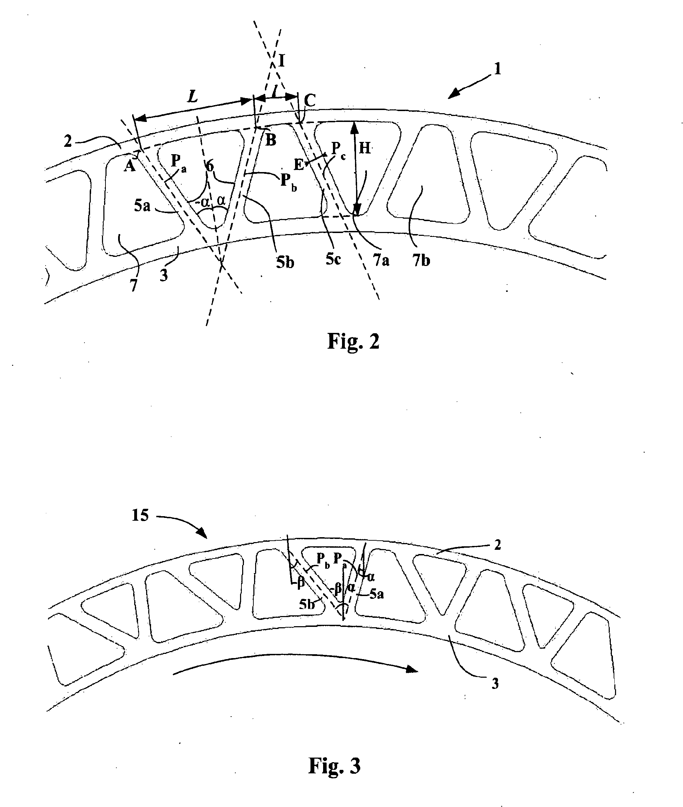

Le corps annulaire 4 de la structure porteuse 1 est composé de cloisons 5 telles que représentées notamment aux figures 1 et 2. La figure 2 est une vue en coupe circonférentielle partielle de la structure porteuse de la figure 1. On entend par coupe circonférentielle, une coupe selon un plan normal à l'axe de rotation XX'. Les cloisons 5 s'étendent axialement substantiellement d'un côté à l'autre du corps annulaire et radialement de la base 3 au sommet 2.

En considérant trois cloisons 5a, 5b et 5c disposées successivement dans la direction circonférentielle CI à la figure 2, ces trois cloisons sont orientées de

façon alternée + alpha ($\alpha$), - alpha (-$\alpha$). L'angle alpha ($\alpha$) est défini relativement à la direction radiale R. Deux cloisons adjacentes présentent toujours une orientation opposée relativement à la direction radiale. Pour les cloisons de la figure 2, les angles alpha ont une valeur de l'ordre de 20 degrés.

Chaque cloison 5 comporte deux parois extérieures 6 et une courbe médiane disposée intérieurement à la cloison dont chaque point est à égale distance des deux parois extérieures. La courbe médiane de chacune des cloisons de la figure 2 est contenue dans un même plan médian appelé plan médian P de la cloison. On constate que les parois extérieures 6 sont aussi planes.

Les parois extérieures 6 des cloisons 5 définissent avec la base 3 et le sommet 2 des cavités 7 de forme générale triangulaire 7a ou trapézoïdale 7b. Les zones de jonction entre deux parois présentent des rayons de courbure de valeur supérieure à 1 mm pour conserver une bonne endurance de l'appui en roulage à plat.

En considérant les trois cloisons 5a, 5b et 5c disposées successivement dans la direction circonférentielle à la figure 2, les deux premières étant en forme de V telles que les deux extrémités du V sont au niveau du sommet, on peut définir les points A, B et C comme les intersections entre les plans médians $P_a$, $P_b$ et $P_c$ de ces trois cloisons 5 avec la surface radialement intérieure du sommet 2. On appelle *L* la distance séparant les points A et B et *l* la distance séparant les points B et C. La distance AB correspond à la distance séparant, au niveau du sommet, les deux premières cloisons et la distance BC, celle séparant la seconde cloison 5b de la troisième 5c. A la figure 2, le rapport *l*/*L* est de l'ordre de 0,37.

Le rapport *l*/*L* varie de préférence entre 0 et 1. Lorsque le rapport est égal à 0, les points B et C sont confondus. Lorsque le rapport est égal à 1, B est à égale distance de A et C. Dans ce dernier cas la transmission des efforts entre le sommet du pneumatique et le sommet de la structure porteuse d'un appui est plus régulière en fonction de l'azimut. Préférentiellement, on a des rapports compris entre 0,8 et 1.

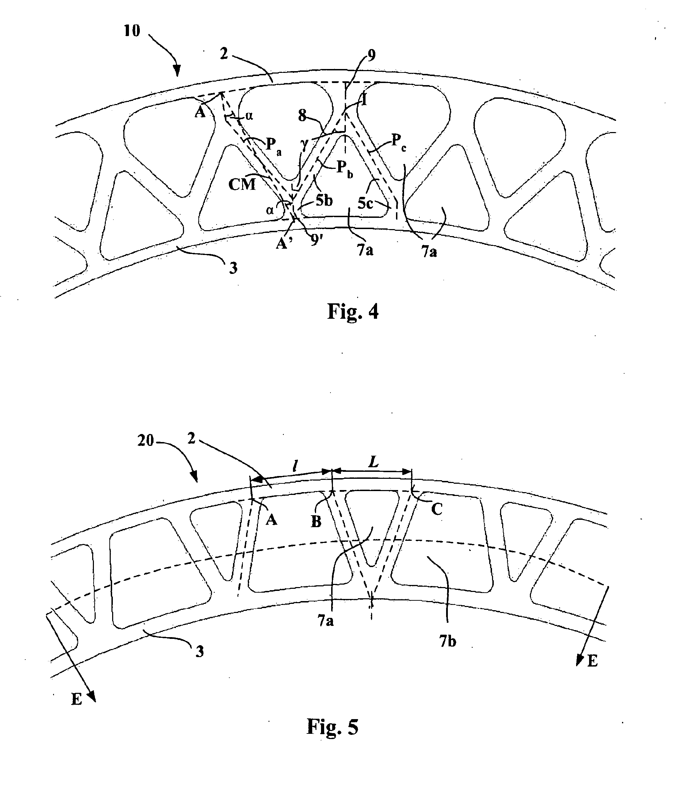

La figure 5 présente une structure porteuse 20 pour laquelle le rapport *l*/*L* est sensiblement égal à 1.

A la figure 2, on voit aussi que l'épaisseur E des cloisons dans leur partie centrale est importante relativement à la hauteur radiale H du corps annulaire 4. Le rapport E/H est supérieur à 10%. Cela a pour conséquence que le fonctionnement normal des cloisons en roulage à plat est d'être sollicitée principalement en compression et de ne subir de flambement que largement au-delà de la charge nominale de fonctionnement en roulage à plat. Ce rapport ne doit pas être trop élevé pour permettre aux cloisons de flamber lors d'un choc tel un nid de poule.

La figure 3 présente une structure porteuse 15 similaire à celle des figures 1 et 2, en dehors des angles d'inclinaison des cloisons 5 d'amplitudes différentes en fonction de leur orientation. La cloison 5a a une inclinaison d'angle alpha ($\alpha$) relativement à la direction radiale et la cloison 5b a une inclinaison d'angle - bêta (-$\beta$). L'angle alpha a une amplitude inférieur à l'angle bêta. Ce mode de réalisation permet de tenir compte de l'existence d'efforts tangentiels lors du passage dans l'aire de contact. Cet appui 15 doit préférentiellement être disposé dans un ensemble roue/pneumatique de telle sorte que son sens de rotation corresponde à la flèche tel qu'indiqué à la figure 3.

La figure 4 présente une structure porteuse 10 dans laquelle deux cloisons adjacentes 5b et 5c ont leurs plans médians $P_b$ et $P_c$ avec une intersection I disposée radialement à l'intérieur du corps annulaire 4. Ces deux cloisons se prolongent radialement à partir de cette intersection jusqu'au sommet 2 par un élément 9 commun d'orientation radiale. Ces deux cloisons ont ainsi une forme en Y. A la figure 4, chaque cloison 5 comprend, de part et d'autre d'un élément plan 8 d'inclinaison gamma ($\gamma$) relativement à la direction radiale, un élément 9 commun avec la cloison adjacente, orienté radialement et se poursuivant jusqu'au sommet ou la base. L'orientation moyenne des cloisons 5 est défini par l'inclinaison alpha ($\alpha$) relativement à la direction radiale de la droite CM qui relie l'intersection A entre l'élément 9 de la cloison 5 et le sommet et l'intersection A' entre l'élément 9' de la cloison 5 et la base. L'angle alpha ($\alpha$) est bien entendu toujours inférieur ou égal à l'inclinaison gamma ($\gamma$) de l'élément central 8 des cloisons 5.

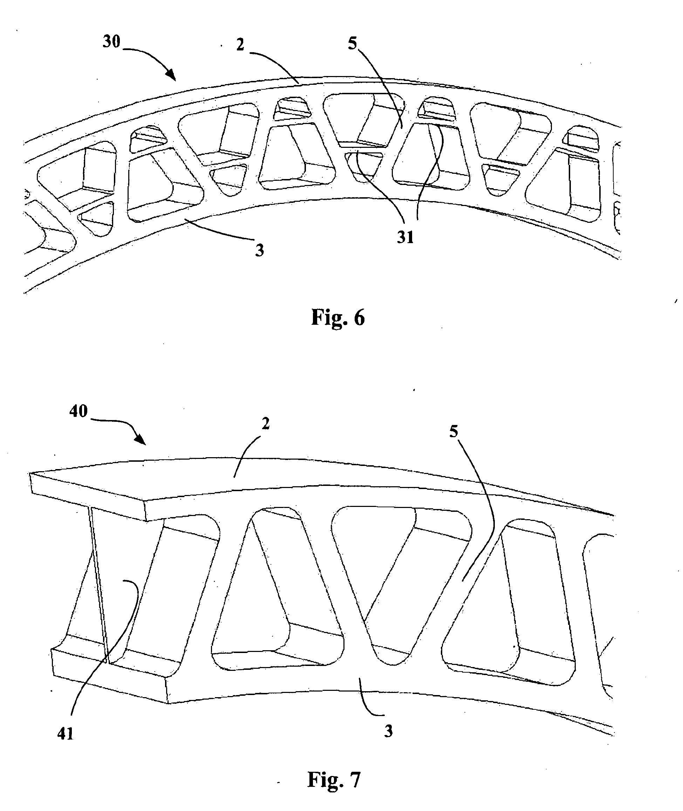

La figure 6 montre une structure porteuse 30 dans laquelle les cloisons 5 sont reliées deux à deux par des cloisons de liaison 31. Ces cloisons de liaison 31 sont planes et orientées axialement et circonférentiellement. Elles servent à renforcer la résistance à une rotation d'ensemble de la base relativement au sommet en roulage à plat sans augmenter de façon pénalisante la rigidité structurelle de la structure porteuse.

La figure 7 présente un mode de réalisation dans lequel les cloisons de liaison forment un voile 41 continu d'orientations circonférentielle et radiale. Un tel voile 41, même d'épaisseur réduite, est très efficace pour renforcer la résistance de la structure porteuse 40 à une rotation d'ensemble de la base 3 relativement au sommet 2.

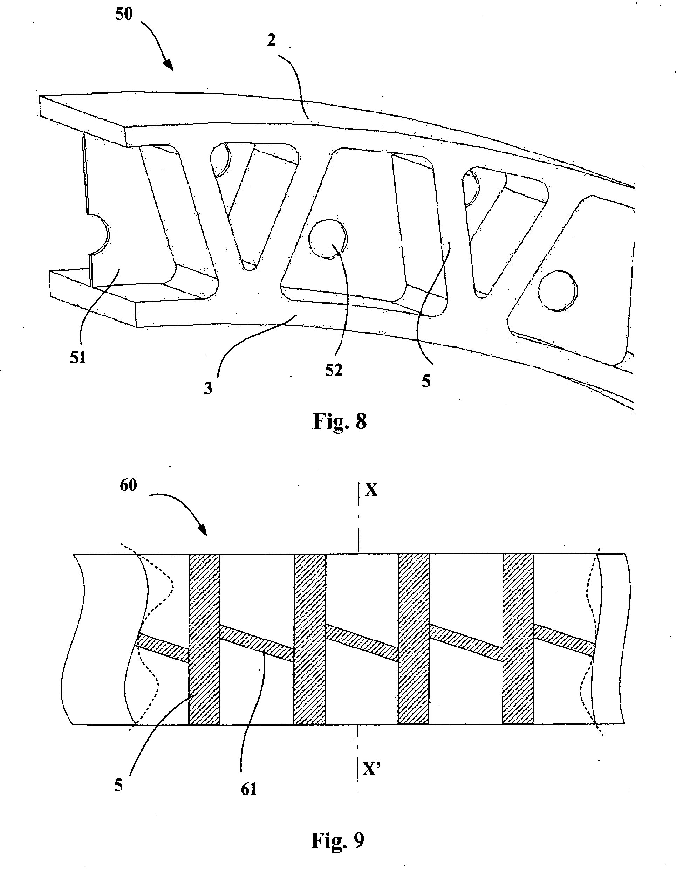

La figure 8 présente une structure porteuse 50, très proche de la structure 40, dans laquelle les cloisons de liaison 51 forment un voile d'orientations circonférentielle et radiale percé de trous 52. Ces trous permettent de diminuer la masse du voile 51 sans modifier sensiblement ses effets mécaniques.

La figure 9 présente une structure porteuse 60, vue en coupe EE tel qu'indiqué à la figure 5, dans laquelle les cloisons de liaison 61 présentent une direction radiale et une inclinaison de quelques degrés relativement à la direction circonférentielle. La structure porteuse 60 de la figure 9 est une variante de la structure porteuse de la figure 7 (utilisation d'un voile pour renforcer la résistance de la structure porteuse). L'inclinaison du voile rompt la continuité de celui-ci permettant d'éviter la transmission d'efforts tangentiels dus à la rotation de l'ensemble et de réduire les concentrations de contrainte à la jonction voile/cloisons.

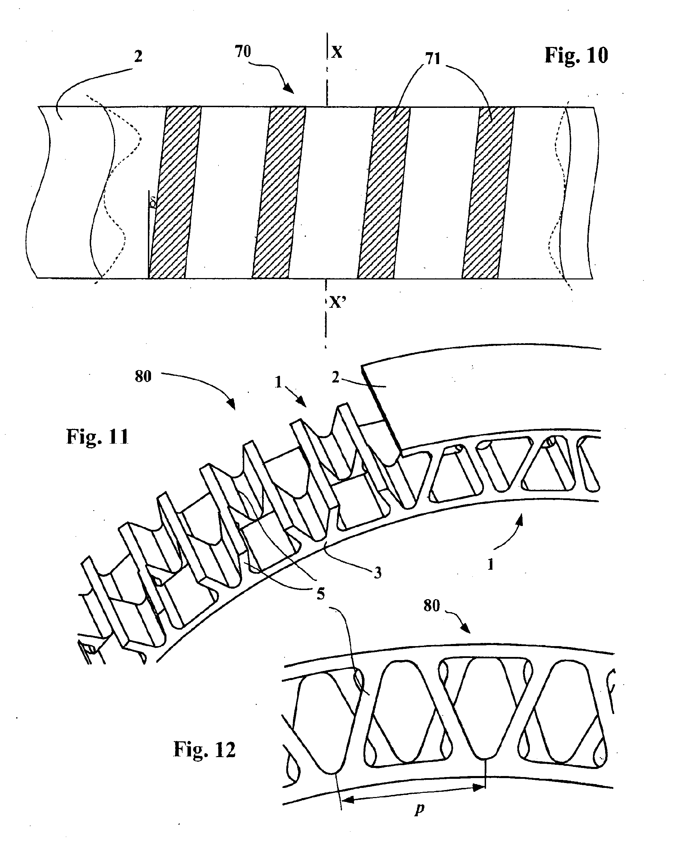

La figure 10 présente une structure porteuse 70, vue en coupe EE tel qu'indiqué à la figure 5, dans laquelle les cloisons 71 présentent une orientation axiale d'angle delta (δ) de quelques degrés. L'angle delta est inférieur à 10 degrés. Cette orientation delta renforce la résistance à une rotation d'ensemble de la base relativement au sommet. C'est une solution alternative aux cloisons de liaison des exemples précédents.

Les figures 11 et 12 présentent une structure porteuse 80 comportant deux structures porteuses 1 disposées axialement. Chaque structure porteuse a ses cloisons 5 disposées selon un pas *p* et les deux structures porteuses sont assemblées avec un décalage circonférentiel de *p/2* l'une par rapport à l'autre. Cela permet d'améliorer encore la régularité du roulage à plat.

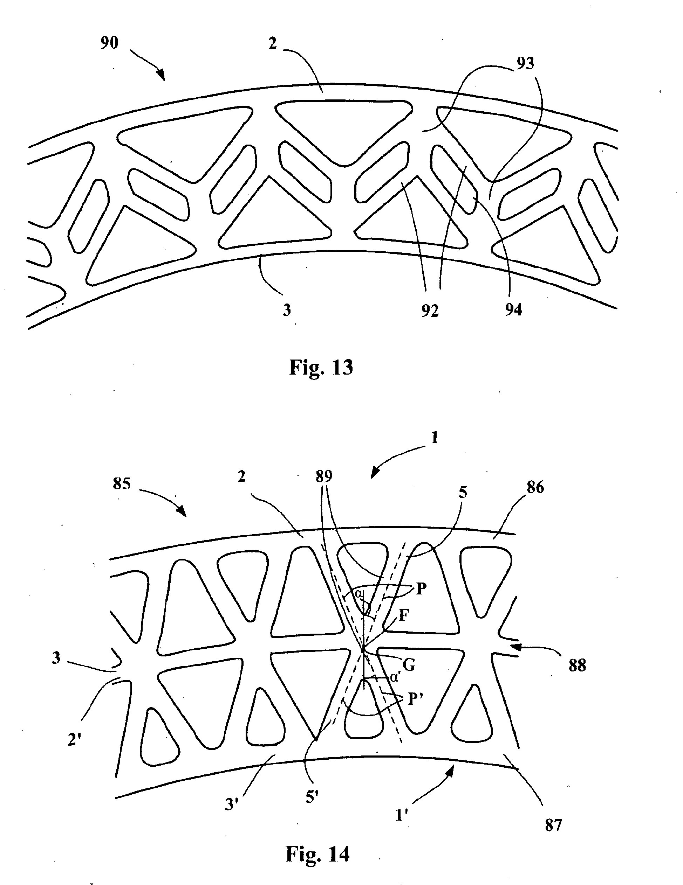

La figure 13 présente une structure porteuse 90 dans laquelle les cloisons 91 sont constituées de deux éléments 92 parallèles, inclinés relativement à la direction radiale et reliés à chaque extrémité par un élément 93 d'orientation radiale se prolongeant radialement jusqu'à la base ou le sommet. L'avantage de ce mode de réalisation est de permettre de réaliser des structures porteuses et des appuis de plus grande hauteur radiale. C'est une solution alternative à des cloisons 5 de plus grande épaisseur qui seraient nécessaires pour supporter les charges correspondantes. Les doubles éléments 92 définissent avec les éléments 93 des cavités 94 en forme de parallélogramme. Les éléments 92 sont d'une épaisseur réduite ce qui permet de s'affranchir de problèmes de moulage qui pourraient être rencontrés avec des épaisseurs plus importantes de cloisons.

Une solution alternative au mode de réalisation de la figure 13 est présenté à la figure 14. A la figure 14 est présenté une structure porteuse 85 constituée de deux structures porteuses 1 et 1' adjacentes radialement.

Cette structure porteuse 85 comprend une base 87 constituée par la base 3' de la structure porteuse 1', un sommet 86 constitué par le sommet 2 de la structure porteuse 1 et un corps annulaire constitué par les corps annulaires des deux structures 1 et 1' ainsi que par un voile 88 d'orientations circonférentielle et axiale correspondant à la base 3 de la structure 1 et le sommet 2' de la structure 1' qui sont confondus.

Le corps annulaire comprend des cloisons 89 constituées chacune d'une cloison 5 de la structure 1 et une cloison 5' de la structure 1'. Il est à noter que les intersections F et G respectivement entre les deux plans médians P et les deux plans médians P' de deux cloisons adjacentes 5 et deux cloisons 5' adjacentes, les cloisons 5 et 5' étant adjacentes radialement sont disposées sensiblement au même azimut. Cela permet d'obtenir une bonne transmission et une bonne répartition des efforts entre les deux structures 1 et 1' lors d'un roulage à plat. De plus, les cloisons 5 et 5' s'écartent de la structure commune base/sommet ou voile 88 avec des orientations inversées relativement à la direction radiale. Les angles alpha et alpha' peuvent ne pas avoir la même valeur mais sont l'un positif, l'autre négatif comme c'est indiqué à la figure 14.

Un appui selon l'invention a été moulé avec un copolyether-ester élastomérique ayant des segments durs composés de polybutylène téréphthalate, et environ 40% en poids de segments mous composés de polyéther téréphthalate. La fraction de segment durs est d'environ 60% en poids. Les blocs de polyéther sont dérivés du polytetraméthylène glycol et ont un poids moléculaire d'environ 1000 g/mole. Le copolyether-ester a un module de traction à 23°C, selon la norme ISO527/2, d'environ 180 MPa.

Cet appui (Fig. 2) a été moulé en utilisant une presse à injecter les matières thermoplastiques dont la force de fermeture est adaptée à une pression de maintien sur la matière de l'ordre de 600 MPa qui est maintenue à cette valeur pendant environ une minute.. La pièce est alimentée par un réseau multi canaux dont le nombre est égal à celui des motifs. Le temps de cycle de cet appui est de l'ordre de deux minutes.

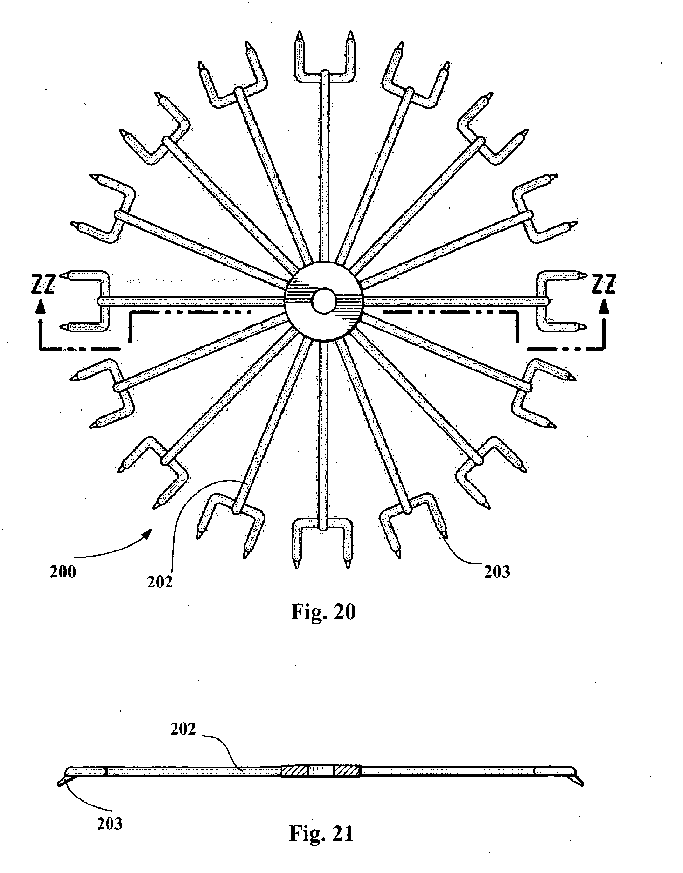

Les figures 20 et 21 montrent un exemple d'un système d'alimentation multi points 200 par canaux 202 et seuils d'injection 203 type « sous-marin » pour un moule destiné à mouler un appui selon l'invention.

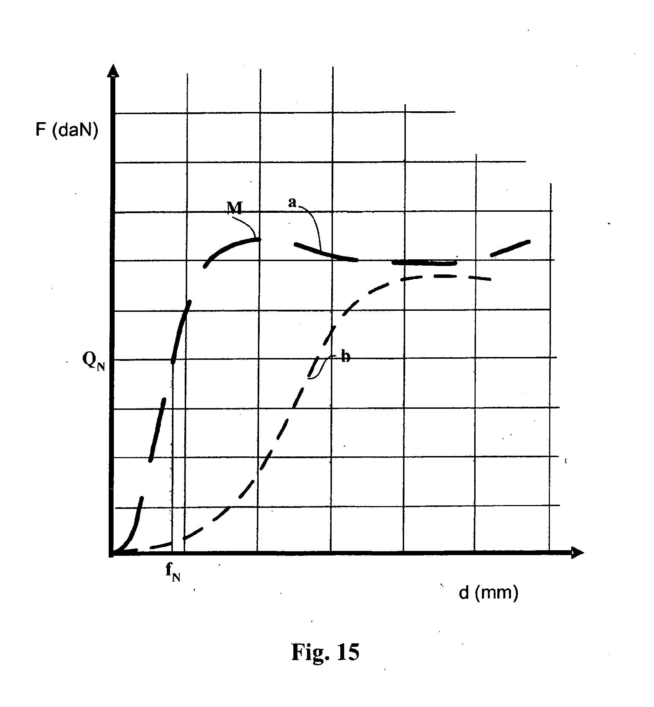

La figure 15 présente des courbes schématiques d'écrasement de cet appui tel que celle présentée à la figure 2 sur un sol plan (courbe a) et un indenteur demi cylindrique (courbe b).

La courbe (a) montre une très forte raideur initiale suivie d'un maximum bien marqué qui correspond à l'apparition du flambement des cloisons 5. La forte raideur initiale correspond au fait que les cloisons d'orientations alternées relativement à la direction radiale ont une épaisseur suffisante compte tenu de leur hauteur utile pour s'épauler l'une l'autre lors de la première phase de l'écrasement. Il est à noter que la charge $Q_N$ que doit supporter la structure porteuse en service se situe dans cette première phase. La structure présente ensuite une phase de flambement particulièrement marquée puisqu'elle se traduit par une diminution des efforts pour une augmentation du déplacement au-delà du point M, maximum de la courbe. Ce flambement très marqué des cloisons est un élément très important pour faciliter l'écrasement de la structure porteuse sur un indenteur demi cylindrique par exemple (courbe b). Lors de cet écrasement, le flambement permet une distance d'indentation élevée avec des efforts relativement faibles. Les structures porteuses selon l'invention ont ainsi des comportements optimisés tout à fait comparables à ceux obtenus avec des appuis à disposition radiale des cloisons en terme de raideur initiale et donc de capacité de charge en roulage à plat tout en ayant une souplesse lors d'une indentation acceptable. Il en résulte que le comportement sous choc est nettement amélioré. Ce résultat est obtenu sans augmentation substantielle de la masse de l'appui.

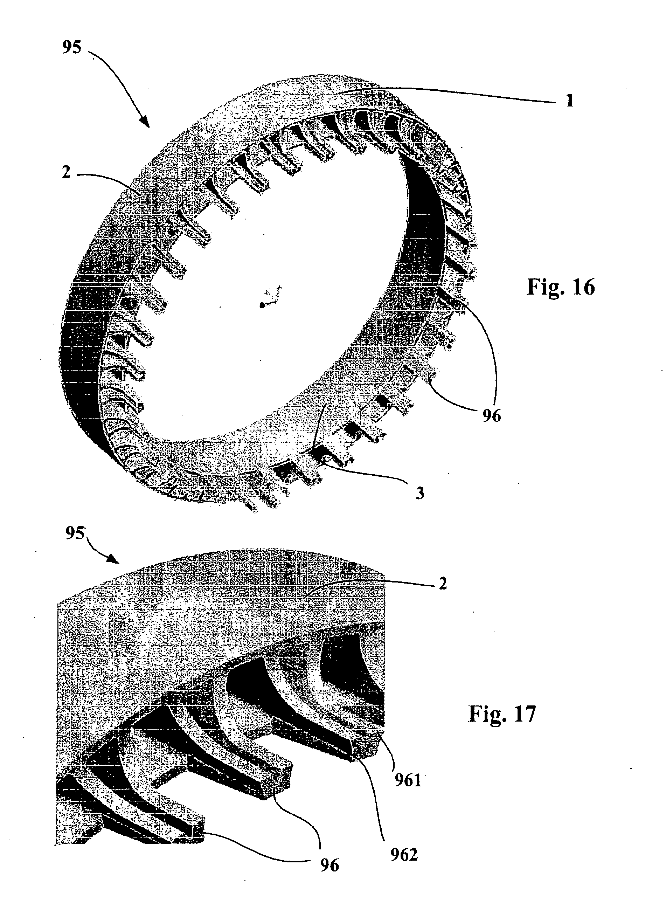

Les figures 16 et 17 présentent un appui 95 selon l'invention constitué d'une structure porteuse 1 selon l'un des modes de réalisation précédent et d'éléments de blocage 96 d'un bourrelet de pneumatique. Les éléments 96 sont disposés axialement d'un côté de la structure porteuse 1. Chaque élément 96 est constitué par les prolongements 961 dans cette direction axiale de deux cloisons adjacentes, disposées en V au niveau de la base 3 de la structure porteuse, et du prolongement 962 de la base, au droit des prolongements 961. Dans l'exemple de réalisation présenté, les prolongements 961 des deux cloisons ont une hauteur radiale qui diminue progressivement axialement, à partir de la structure porteuse vers l'extérieur, de sensiblement l'ensemble du corps annulaire jusqu'à une hauteur adaptée en fonction des efforts de blocage à fournir. La fonction des éléments de blocage est de coopérer avec un bossage de sécurité pour bloquer en position un bourrelet de pneumatique et démonter l'appui par la poussée d'un galet de montage.

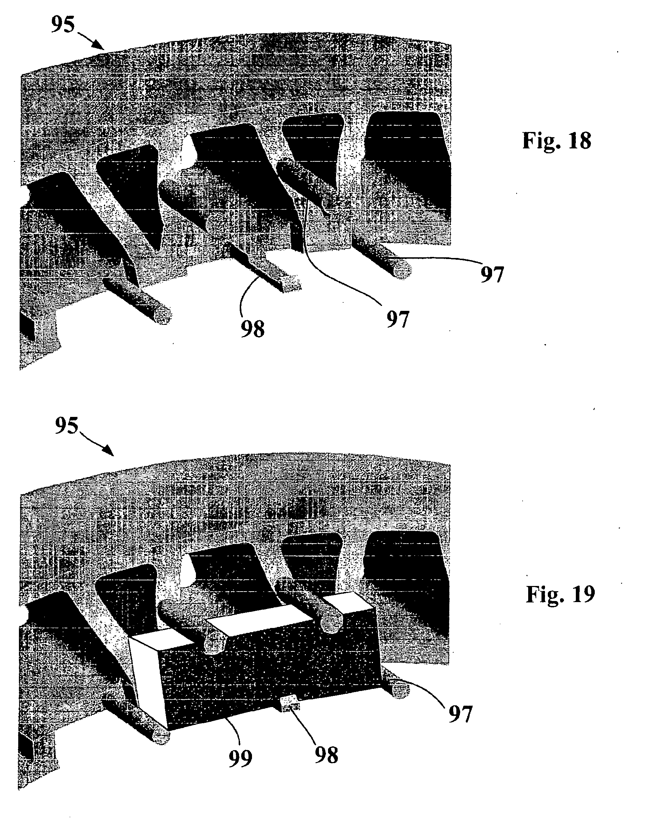

La figure 18 illustre la présence, optionnelle, de pions de positionnement 97, 97, d'un module de roue 99 placés, à un azimut donné, en remplacement des éléments de blocage pour fixer un module de roue. Un clip de blocage axial 98 est aussi prévu pour bloquer en position le module de roue 99 après sa mise en place. La figure 19 illustre le module de roue mis en place sur le côté de l'appui 95.

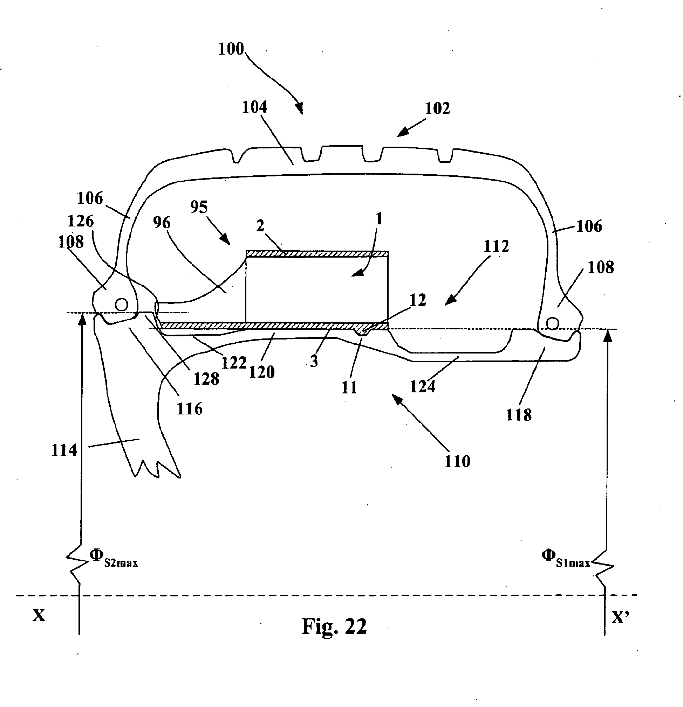

La figure 22 illustre un ensemble 100 pneumatique 102, roue 110 et appui 95 selon l'invention. La roue 110 de cet ensemble présente un disque 114 et une jante 112 avec deux sièges 118 et 116 de diamètres maximum $\Phi_{S1max}$ et $\Phi_{S2max}$ différents. La zone de liaison entre le disque 114 et la jante 112 est disposée du côté du siège 116 de plus grand diamètre $\Phi_{S2max}$. Le pneumatique 102 comprend une bande de roulement 104, deux flancs 106 et deux bourrelets 108 de diamètres différents adaptés pour venir reposer sur les sièges 116 et 118 de la jante 112. La jante 112 comprend une portée d'appui 120 autour de laquelle repose sensiblement la structure porteuse 1 de l'appui 95 et, entre le siège 116 et la portée d'appui 120, une gorge circonférentielle 122. Cette gorge circonférentielle 122 a pour fonction d'accueillir la valve de roue et de permettre le montage et le démontage du bourrelet 108 du pneumatique sur le siège 116. La portée d'appui 120 et la base de la structure porteuse 1 comportent aussi des moyens de blocage 11, 12, de l'appui 95 en position.

Les éléments de blocage 96 de l'appui 95 viennent axialement presque en appui contre le flanc 126 de la gorge circonférentielle 122. Le diamètre maximum des éléments de blocage 96 à leur extrémité axiale est supérieur au diamètre $\Phi_{S2max}$ de quelques millimètres pour permettre le démontage de l'appui 96 par une poussée axiale d'un galet de montage. Les éléments de blocage 96 coopèrent ainsi avec le bossage de sécurité 128 du siège 116 pour bloquer en position le bourrelet 108 du pneumatique 102.

L'invention n'est pas limitée aux exemples décrits et représentés et diverses modifications peuvent y être apportées sans sortir de son cadre seulement limité par les revendications annexées.

## Revendications

1. Structure porteuse (1, 10, 15, 20, 30, 40, 50, 60, 70, 80, 85, 90) pour appui de soutien (95) destiné à être monté sur une jante (112) à l'intérieur d'un pneumatique (102) équipant un véhicule pour supporter la bande de roulement (104) de ce pneumatique en cas de perte de pression de gonflage, ladite structure porteuse (1, 10, 15, 20, 30, 60, 70, 80, 85, 90) comportant une base (3, 87) sensiblement cylindrique, un sommet (2, 86) sensiblement cylindrique et un corps annulaire (4) reliant la base et le sommet, dans laquelle le corps comporte une pluralité de cloisons (5, 71, 89, 91) régulièrement réparties circonférentiellement, s'étendant axialement substantiellement d'un côté à l'autre dudit corps et radialement de la base au sommet avec une orientation moyenne relativement à la direction radiale donnée et dans laquelle deux cloisons adjacentes circonférentiellement présentent une orientation inversée relativement à la direction radiale, **caractérisée en ce que** l'orientation moyenne des cloisons est comprise entre 10 et 50 degrés, **en ce que** deux cloisons adjacentes circonférentiellement ont au plus une zone commune disposée au niveau de la base ou du sommet et **en ce que** deux cloisons adjacentes circonférentiellement définissent avec la base et/ou le sommet des cavités (7, 7a, 7b, 94) en forme de triangle et/ou de trapèze.

2. Structure porteuse (1, 10, 15, 20, 30, 40, 50, 60, 70, 80, 85, 90) selon la revendication 1, dans laquelle le rapport entre l'épaisseur des cloisons dans leur partie centrale (E) et la hauteur radiale du corps annulaire (H) est supérieur à 10 %.

3. Structure porteuse (1, 10, 15, 20, 30, 40, 50, 60, 70, 80, 85, 90) selon l'une quelconque des revendications 1 et 2, dans laquelle la base comprend des matériaux dont le module en extension est supérieur aux modules en extension des matériaux constituants du sommet.

4. Structure porteuse (15) selon l'une quelconque des revendications 1 à 3, dans laquelle deux cloisons adjacentes présentent, relativement à la direction radiale, des inclinaisons moyennes d'angles (alpha, bêta) différents.

5. Structure porteuse (1, 10, 15, 20, 30, 40, 50, 60, 70, 80, 85, 90) selon l'une quelconque des revendications 1 à 4, dans laquelle, les cloisons (5, 71, 89, 91) comportant deux parois extérieures (6) et une courbe médiane disposée intérieurement dont chaque point est à égale distance des deux parois extérieures, ladite courbe médiane est, au moins pour la partie centrale desdites cloisons, contenue dans un même plan médian (P).

6. Structure porteuse (1, 10, 15, 20, 30, 40, 50, 60, 70, 80, 85, 90) selon la revendication 5, dans laquelle les parois extérieures (6) des cloisons sont planes, au moins dans leur partie centrale.

7. Structure porteuse (10) selon l'une quelconque des revendications 5 et 6, dans laquelle, lorsque deux cloisons adjacentes présentent une intersection entre leurs plans médians disposée radialement entre la base et le sommet, lesdites deux cloisons se prolongent radialement jusqu'à la base ou le sommet selon le cas par une partie commune (9) et l'ensemble présente dans tout plan circonférentiel une forme générale de Y.

8. Structure porteuse (10, 20) selon l'une quelconque des revendications 5 à 7, dans laquelle, en considérant trois cloisons adjacentes circonférentiellement, les deux premières étant en forme de V, telles que les deux extrémités du V sont au niveau du sommet, *L* étant la distance circonférentielle séparant les deux points d'intersection des plans médians desdites deux premières cloisons et dudit sommet, et *l* étant la distance circonférentielle séparant les points d'intersection avec le sommet des plans médians des seconde et troisième cloisons, on a :

$$0 \le \frac{l}{L} \le 1$$

9. Structure porteuse (20) selon la revendication 8, dans laquelle on a :

$$0,80 \le \frac{l}{L} \le 1$$

10. Structure porteuse (30, 40, 50, 60, 85) selon l'une des revendications 1 à 9, dans laquelle le corps comprend en plus des cloisons de liaison (31, 41, 51, 61, 88) régulièrement réparties entre deux cloisons adjacentes et orientées circonférentiellement.

11. Structure porteuse selon la revendication 10, dans laquelle le rapport d'épaisseur entre les cloisons de liaison *e* et les cloisons *E* est tel que :

$$0,1 \prec \frac{e}{E} \prec 0,5$$

12. Structure porteuse (50) selon l'une des revendications 10 et 11, dans laquelle lesdites cloisons de liaison (51) comportent des trous (52).

13. Structure porteuse (70) selon l'une des revendications 1 à 12, dans laquelle les cloisons (71) présentent une inclinaison axiale de quelques degrés.

14. Structure porteuse (90) selon l'une quelconque des revendications 1 à 13, dans laquelle chacune des cloisons (91) est constituée de deux cloisons (92) parallèles reliées à chaque extrémité par une cloison (93) d'orientation radiale.

15. Structure porteuse selon l'une quelconque des revendications 1 à 14, dans laquelle le matériau constitutif de ladite structure porteuse est un mélange caoutchouteux de module d'élasticité compris entre 10 et 40 MPa.

16. Structure porteuse selon l'une quelconque des revendications 1 à 14, dans laquelle le matériau constitutif de ladite structure porteuseest un élastomère de polyuréthane de module d'élasticité compris entre 30 et 400 MPa.

17. Structure porteuse selon l'une quelconque des revendications 1 à 14, dans laquelle le matériau constitutif de ladite structure porteuseest un élastomère thermoplastique de module d'élasticité compris entre 50 et 800 MPa.

18. Appui de soutien (95) **caractérisé en ce qu'**il comporte une structure porteuse selon l'une quelconque des revendications 1 à 17 et **en ce que** la base de ladite structure porteuse constitue, au moins en partie, la base de l'appui destinée à s'adapter autour d'une jante et **en ce que** que le sommet de ladite structure porteuse constitue, au moins en partie, le sommet de l'appui destiné à entrer en contact avec la partie intérieure d'un pneumatique situé sous la bande de roulement en cas de perte de pression de gonflage et laissant une garde par rapport à celle-ci à la pression nominale de fonctionnement du pneumatique.

19. Appui de soutien selon la revendication 18, tel qu'il comprend plusieurs structures porteuses adjacentes axialement.

20. Appui de soutien selon la revendication 18, tel qu'il comprend plusieurs structures porteuses adjacentes radialement.

**Claims**

1. A load-bearing structure (1, 10, 15, 20, 30, 40, 50, 60, 70, 80, 85, 90) for a bearing support (95) intended to be mounted on a rim (112) inside a tire (102) fitted on a vehicle to support the tread (104) of said tire in the event of a loss of inflation pressure, said load-bearing structure (1, 10, 15, 20, 30, 60, 70, 80, 85, 90) comprising a substantially cylindrical base (3, 87), a substantially cylindrical crown (2, 86) and an annular body (4) connecting the base and the crown, wherein the body comprises a plurality of partitions (5, 71, 89, 91) distributed regularly circumferentially, extending axially substantially from one side to the other of the body and radially from the base to the crown with a mean orientation relative to the radial direction, and wherein two circumferentially adjacent partitions exhibit contrary orientations relative to the radial direction, **characterized in that** the mean orientation of the partitions is between 10 and 50 degrees, **in that** two circumferentially adjacent partitions have at most one common zone laid out at the base or the crown and **in that** two adjacent partitions define with the base and/or the crown cavities (7, 7a, 7b, 94) in the form of triangles and/or trapeziums.

2. A load-bearing structure (1, 10, 15, 20, 30, 40, 50, 60, 70, 80, 85, 90) according to claim 1, in which the ratio between the thickness of the partitions in their central portion (E) and the radial height of the annular body (H) is greater than 10%.

3. A load-bearing structure (1, 10, 15, 20, 30, 40, 50, 60, 70, 80, 85, 90) according to any one of claims 1 and 2, in which the base comprises materials whose modulus in extension is greater than the modulus in extension of the materials constituting the crown.

4. A load-bearing structure (15) according to any one of claims 1 to 3, in which two adjacent partitions exhibit mean inclinations of different angles (alpha, beta) relative to the radial direction.

5. A load-bearing structure (1, 10, 15, 20, 30, 40, 50, 60, 70, 80, 85, 90) according to any one of claims 1 to 4, in which, since the partitions (5, 71, 89, 91) comprise two external walls (6) and an internally disposed median curve, each point of which is equidistant from the two external walls, said median curve is, at least for the central portion of said partitions, contained in one and the same median plane (P)..

6. A load-bearing structure (1, 10, 15, 20, 30, 40, 50, 60, 70, 80, 85, 90) according to claim 5, in which the external walls (6) of the partitions are planar, at least in their central portion.

7. A load-bearing structure (10) according to any one of claims 5 and 6 in which, when two adjacent partitions exhibit an intersection between their median planes disposed radially between the base and the crown, said two partitions are extended radially as far as the base or the crown, as appropriate, by a common part (9) and the assembly is generally Y-shaped in all circumferential planes.

8. A load-bearing structure (10, 20) according to any one of claims 5 to 7, in which, looking at three circumferentially adjacent partitions, the first two being in the shape of a V, such that the two ends of the V are at the level of the crown, $L$ being the circumferential distance separating the two points of intersection of the median planes of said first two partitions with the crown, and $l$ being the circumferential distance separating the points of intersection with the crown of the median planes of the second and third partitions, the following is the case:

$$0 \le \frac{l}{L} \le 1$$

9. A load-bearing structure (20) according to claim 8, in which:

$$0.80 \le \frac{l}{L} \le 1$$

10. A load-bearing structure (30, 40, 50, 60, 85) according to one of claims 1 to 9, in which the body additionally comprises connecting partitions (31, 41, 51, 61, 88) distributed regularly between two adjacent partitions and oriented circumferentially.

11. A load-bearing structure according to claim 10, in which the thickness ratio between the connecting partitions $e$ and the partitions $E$ is such that:

$$0.1 \prec \frac{e}{E} \prec 0.5$$

12. A load-bearing structure (50) according to one of claims 10 and 11, in which said connecting partitions (51) comprise holes (52).

13. A load-bearing structure (70) according to one of claims 1 to 12, in which the partitions (71) exhibit an axial inclination of several degrees.

14. A load-bearing structure (90) according to any one of claims 1 to 13, in which each of the partitions (91) consists of two parallel partitions (92) connected at each end by a radially oriented partition (93).

**15.** A load-bearing structure according to one of claims 1 to 14, in which the material constituting said support is a rubber mix with a modulus of elasticity of between 10 and 40 MPa.

**16.** A load-bearing structure according to one of claims 1 to 14, in which the material constituting said support is a polyurethane elastomer with a modulus of elasticity of between 30 and 400 MPa.

**17.** A load-bearing structure according to one of claims 1 to 14, in which the material constituting said support is a thermoplastic elastomer with a modulus of elasticity of between 50 and 800 MPa.

**18.** A bearing support (95) **characterized in that** it comprises a load-bearing structure according to one of claims 1 to 17, such that the base of said load-bearing structure constitutes, at least in part, the base of the support intended to conform to a rim and such that the crown of said load-bearing structure constitutes, at least in part, the crown of the support intended to come into contact with the internal part of a tire situated under the tread in the event of a loss of inflation pressure and leaving a clearance relative to the latter at the rated operating pressure of the tire.

**19.** A bearing support according to claim 18, such that it comprises a plurality of axially adjacent load-bearing structures.

**20.** A bearing support according to claim 18, such that it comprises a plurality of radially adjacent load-bearing structures.


**Patentansprüche**

**1.** Tragstruktur (1, 10, 15, 20, 30, 40, 50, 60, 70, 80, 85, 90) für eine Stützauflage (95), die dazu bestimmt ist, auf eine Felge (112) im Inneren eines ein Fahrzeug bestückenden Luftreifens (102) montiert zu werden, um die Lauffläche (104) dieses Luftreifens im Fall eines Fülldruckverlusts zu stützen, wobei die Tragstruktur (1, 10, 15, 20, 30, 60, 70, 80, 85, 90) eine im Wesentlichen zylindrische Basis (3, 87), einen im Wesentlichen zylindrischen Scheitel (2, 86) und einen ringförmigen Körper (4) aufweist, der die Basis und den Scheitel verbindet, bei der der Körper mehrere in Umfangsrichtung gleichmäßig verteilte Trennwände (5, 71, 89, 91) aufweist, die sich axial im Wesentlichen von einer Seite des Körpers zur anderen und radial von der Basis zum Scheitel mit einer gegebenen mittleren Ausrichtung bezüglich der radialen Richtung erstrecken, und bei der zwei in Umfangsrichtung benachbarte Trennwände eine bezüglich der radialen Richtung umgekehrte Ausrichtung haben, **dadurch gekennzeichnet, dass** die mittlere Ausrichtung der Trennwände zwischen 10 und 50 Grad liegt, dass zwei in Umfangsrichtung benachbarte Trennwände höchstens eine gemeinsame Zone haben, die in Höhe der Basis oder des Scheitels angeordnet ist, und dass zwei in Umfangsrichtung benachbarte Trennwände mit der Basis und/oder dem Scheitel Hohlräume (7, 7a, 7b, 94) in Form eines Dreiecks und/oder eines Trapezes definieren.

**2.** Tragstruktur (1, 10, 15, 20, 30, 40, 50, 60, 70, 80, 85, 90) nach Anspruch 1, bei der das Verhältnis zwischen der Dicke der Trennwände in ihrem zentralen Bereich (E) und der radialen Höhe des ringförmigen Körpers (H) größer als 10 % ist.

**3.** Tragstruktur (1, 10, 15, 20, 30, 40, 50, 60, 70, 80, 85, 90) nach einem der Ansprüche 1 und 2, bei der die Basis Materialien enthält, deren Dehnungsmodul größer ist als die Dehnungsmodule der den Scheitel bildenden Materialien.

**4.** Tragstruktur (15) nach einem der Ansprüche 1 bis 3, bei der zwei benachbarte Trennwände bezüglich der radialen Richtung mittlere Neigungen mit unterschiedlichen Winkeln (alpha, beta) haben.

**5.** Tragstruktur (1, 10, 15, 20, 30, 40, 50, 60, 70, 80, 85, 90) nach einem der Ansprüche 1 bis 4, bei der, da die Trennwände (5, 71, 89, 91) zwei Außenwände (6) und eine innen angeordnete Mittelkurve aufweisen, von der jeder Punkt den gleichen Abstand zu den zwei Außenwänden hat, die Mittelkurve zumindest für den zentralen Bereich der Trennwände in der gleichen Mittelebene (P) liegt.

**6.** Tragstruktur (1, 10, 15, 20, 30, 40, 50, 60, 70, 80, 85, 90) nach Anspruch 5, bei der die Außenwände (6) der Trennwände zumindest in ihrem zentralen Bereich eben sind.

**7.** Tragstruktur (10) nach einem der Ansprüche 5 und 6, bei der, wenn zwei benachbarte Trennwände einen Schnittpunkt zwischen ihren Mittelebenen haben, der radial zwischen der Basis und dem Scheitel angeordnet ist, die zwei Trennwände sich radial bis zur Basis bzw. zum Scheitel durch einen gemeinsamen Bereich (9) verlängern, und die Einheit in jeder Umfangsebene eine allgemeine Y-Form hat.

**8.** Tragstruktur (10, 20) nach einem der Ansprüche 5 bis 7, bei der bei Betrachtung von drei in Umfangsrichtung benachbarten Trennwänden, wobei die zwei ersten V-förmig sind, derart, dass die zwei Enden des V sich in Höhe des Scheitels befinden, wobei L der Umfangsabstand ist, der die zwei Schnittpunkte der Mittelebenen der zwei ersten Trennwände und des Scheitels trennt, und 1 der Umfangsabstand ist, der die Schnittpunkte mit dem Scheitel der Mittelebenen der zweiten und dritten Trennwände trennt, gilt:

$$0 \leq \frac{l}{L} \leq 1$$

9. Tragstruktur (20) nach Anspruch 8, bei der gilt:

$$0,80 \leq \frac{l}{L} \leq 1$$

10. Tragstruktur (30, 40, 50, 60, 85) nach einem der Ansprüche 1 bis 9, bei der der Körper zusätzlich Verbindungstrennwände (31, 41, 51, 61, 88) aufweist, die gleichmäßig zwischen zwei benachbarten Trennwänden verteilt und in Umfangsrichtung ausgerichtet sind.

11. Tragstruktur nach Anspruch 10, bei der das Dickenverhältnis zwischen den Verbindungstrennwänden e und den Trennwänden E so ist, dass gilt:

$$0,1 < \frac{e}{E} < 0,5$$

12. Tragstruktur (50) nach einem der Ansprüche 10 und 11, bei der die Verbindungstrennwände (51) Löcher (52) aufweisen.

13. Tragstruktur (70) nach einem der Ansprüche 1 bis 12, bei der die Trennwände (71) eine axiale Neigung von einigen Grad haben.

14. Tragstruktur (90) nach einem der Ansprüche 1 bis 13, bei der jede der Trennwände (91) aus zwei parallelen Trennwänden (92) besteht, die an jedem Ende durch eine Trennwand (93) radialer Ausrichtung verbunden sind.

15. Tragstruktur nach einem der Ansprüche 1 bis 14, bei der das Material der Tragstruktur eine Kautschukmischung mit einem Elastizitätsmodul zwischen 10 und 40 MPa ist.

16. Tragstruktur nach einem der Ansprüche 1 bis 14, bei der das Material der Tragstruktur ein Polyurethan-Elastomer mit einem Elastizitätsmodul zwischen 30 und 400 MPa ist.

17. Tragstruktur nach einem der Ansprüche 1 bis 14, bei der das Material der Tragstruktur ein thermoplastisches Elastomer mit einem Elastizitätsmodul zwischen 50 und 800 MPa ist.

18. Stützauflage (95), **dadurch gekennzeichnet, dass** sie eine Tragstruktur nach einem der Ansprüche 1 bis 17 aufweist und dass die Basis der Tragstruktur zumindest zum Teil die Basis der Auflage bildet, die dazu bestimmt ist, sich um eine Felge herum anzupassen, und dass der Scheitel der Tragstruktur zumindest zum Teil den Scheitel der Auflage bildet, der dazu bestimmt ist, im Fall eines Fülldruckverlusts mit dem inneren Bereich eines Luftreifens in Kontakt zu kommen, der sich unter der Lauffläche befindet, und bei Nennbetriebsdruck des Luftreifens einen Abstand zu diesem lässt.

19. Stützauflage nach Anspruch 18, derart, dass sie mehrere axial benachbarte Tragstrukturen aufweist.

20. Stützauflage nach Anspruch 18, derart, dass sie mehrere radial benachbarte Tragstrukturen aufweist.

**Fig. 1**

**Fig. 2**

**Fig. 3**

Fig. 4

Fig. 5

**Fig. 6**

**Fig. 7**

50

2

51

3

52

5

**Fig. 8**

60

X

5

61

X'

**Fig. 9**

Fig. 10

Fig. 11

Fig. 12

90    2    93

3    92    94

**Fig. 13**

85    2    89    1    5    86

P

α

F

3    G

α'

2'    P'    88

3'    5'    1'    87

**Fig. 14**

**Fig. 15**

95

2

1

Fig. 16

96

3

95

2

Fig. 17

961

96

962

Fig. 18

Fig. 19

ZZ          ZZ

200

202          203

**Fig. 20**

202

203          **Fig. 21**

**Fig. 22**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0076791 A
- WO 2005044598 A

- JP 07032827 B